# EUROPEAN PATENT APPLICATION

(11) **EP 4 310 946 A1**
(43) Date of publication of application: **24.01.2024**
(21) Application number: 22770801.3
(22) Date of filing: 06.01.2022
(51) Int. Cl.: H01M 4/36, H01M 4/505, H01M 4/525, H01M 4/62, H01M 10/0587, H01M 50/107, H01M 50/131, H01M 50/533, H01M 50/538

(54) **NON-AQUEOUS ELECTROLYTE SECONDARY BATTERY**

(30) Priority: 18.03.2021 JP 2021044649
(71) Applicant: Panasonic Intellectual Property Management Co., Ltd., Osaka-shi, Osaka 540-6207 (JP)
(72) Inventor: GESHI, Shinya, Kadoma-shi, Osaka 571-0057 (JP); INOUE, Katsuya, Kadoma-shi, Osaka 571-0057 (JP); OGASAWARA, Takeshi, Kadoma-shi, Osaka 571-0057 (JP)
(74) Representative: Novagraaf International SA
(86) International application number: PCT/JP2022/000159
(87) International publication number: WO 2022/196039

(57) **Abstract**

This non-aqueous electrolyte secondary battery comprises an electrode body, an exterior body which has a prescribed exterior shape and which houses the electrode body, and a sealing body which seals an opening at the upper end of the exterior body. A positive electrode included in the electrode body includes a positive electrode current collector and a positive electrode mixture layer which is formed on the surface of the positive electrode current collector and which includes a positive electrode active material and a conductive agent. The positive electrode active material contains a lithium-containing complex oxide. The lithium-containing complex oxide has a layered rock salt structure, contains substantially no Co, and contains at least Ni and Mn. The Ni content in the lithium-containing complex oxide is not less than 70 mol% with respect to the total number of moles of metal elements excluding Li. The basis weight of the positive electrode mixture layer is not less than 250 g/m². Three or more positive electrode leads are drawn out in the electrode body.

## Description

### TECHNICAL FILED

The present disclosure generally relates to a non-aqueous electrolyte secondary battery.

### BACKGROUND ART

In recent years, non-aqueous electrolyte secondary batteries that comprise a positive electrode, a negative electrode, and a non-aqueous electrolyte, and that move Li ions and the like between the positive electrode and the negative electrode to perform charge and discharge have been commonly used as secondary batteries with high output and high capacity. Patent Literature 1 discloses a secondary battery that attempts to improve output characteristics of the battery and that reduces a cost of current collecting members by providing the current collecting members on upper and lower sides of an electrode assembly having a plurality of protruded tabs. Patent Literature 1 describes a lithium-containing composite oxide including two or more elements selected from the group consisting of Co, Ni, and Mn, as a positive electrode active material.

### CITATION LIST

### PATENT LITERATURE

PATENT LITERATURE 1: Japanese Patent No. 5747082

### SUMMARY

### TECHNICAL PROBLEM

Patent Literature 1 discloses a positive electrode active material containing Ni, Mn, and Co. It is considered to design a lithium-containing composite oxide included in the positive electrode active material in which a content rate of Ni is increased to yield a high battery capacity and a content rate of Co is decreased to reduce a manufacturing cost. However, decreasing the content rate of Co decreases electron conductivity, and thereby a secondary battery using a high-Ni-containing lithium-containing composite oxide containing substantially no Co may increase battery resistance to decrease output characteristics. The art in Patent Literature 1 does not consider achievement of both of the reduction of the battery resistance and the cost reduction, and still has a room for improvement.

It is an advantage of the present disclosure to provide a non-aqueous electrolyte secondary battery having improved output characteristics with reducing a cost.

### SOLUTION TO PROBLEM

A non-aqueous electrolyte secondary battery of an aspect of the present disclosure comprises: an electrode assembly in which a band-shaped positive electrode and a band-shaped negative electrode are wound with a separator interposed therebetween; a bottomed cylindrical exterior with greater than or equal to 25 mm in outer diameter that houses the electrode assembly and that is connected to the negative electrode; and a sealing assembly that seals an opening of an upper end of the exterior and that is connected to the positive electrode, wherein the positive electrode includes: a positive electrode current collector; and a positive electrode mixture layer formed on a surface of the positive electrode current collector and containing a positive electrode active material and a conductive agent, the positive electrode active material includes a lithium-containing composite oxide, and the lithium-containing composite oxide has a layered rock-salt structure, contains substantially no Co, and contains at least Ni and Mn, a content rate of Ni in the lithium-containing composite oxide is greater than or equal to 70 mol% relative to a total number of moles of metal elements excluding Li, a basis weight of the positive electrode mixture layer is greater than or equal to 250 g/m², and in the electrode assembly, greater than or equal to three positive electrode leads are drawn out.

A non-aqueous electrolyte secondary battery of an aspect of the present disclosure comprises: an electrode assembly in which a band-shaped positive electrode and a band-shaped negative electrode are wound with a separator interposed therebetween; a bottomed cylindrical exterior with greater than or equal to 25 mm in outer diameter that houses the electrode assembly and that is connected to the negative electrode; and a sealing assembly that seals an opening of an upper end of the exterior and that is connected to the positive electrode, wherein the positive electrode includes: a positive electrode current collector; and a positive electrode mixture layer formed on a surface of the positive electrode current collector and containing a positive electrode active material and a conductive agent, the positive electrode active material includes a lithium-containing composite oxide, and the lithium-containing composite oxide has a layered rock-salt structure, contains substantially no Co, and contains at least Ni and Mn, a content rate of Ni in the lithium-containing composite oxide is greater than or equal to 70 mol% relative to a total number of moles of metal elements excluding Li, a basis weight of the positive electrode mixture layer is greater than or equal to 250 g/m², and in the electrode assembly, the positive electrode protruding above the negative electrode and the separator is connected to a positive electrode current collecting member, and the positive electrode current collecting member and the sealing assembly are connected with a positive electrode lead.

### ADVANTAGEOUS EFFECTS OF INVENTION

According to the non-aqueous electrolyte secondary battery of an aspect of the present disclosure, both of the improvement of output characteristics and the cost reduction may be achieved.

### BRIEF DESCRIPTION OF DRAWING

FIG. 1 is a vertical cross-sectional view of a non-aqueous electrolyte secondary battery of an example of an embodiment.
FIG. 2 is a front view of a positive electrode and a negative electrode that constitute an electrode assembly comprised in the non-aqueous electrolyte secondary battery in FIG. 1 in a developed state.
FIGS. 3(a) and 3(b) are plane views illustrating a position where positive electrode leads are arranged in an upper surface of an electrode assembly. FIG. 3(a) illustrates an example of arrangement in substantially one line in a radial direction, and FIG. 3(b) illustrates an example of arrangement with substantially same angles.
FIG. 4 is a vertical cross-sectional view of a non-aqueous electrolyte secondary battery of another example of an embodiment.
FIG. 5 is a perspective view of an electrode assembly comprised in the non-aqueous electrolyte secondary battery in FIG. 3, and is a view illustrating constitution of a positive electrode, negative electrode, and separator in a state where a proximity of an outside end of winding is developed.

### DESCRIPTION OF EMBODIMENTS

A layered rock-salt structure of a lithium-containing composite oxide includes a transition metal layer containing Ni and the like, a Li layer, and an oxygen layer. By the Li layer reversibly intercalating and deintercalating Li ions present therein, charge-discharge reactions of a battery proceed. In the lithium-containing composite oxide, increasing a content rate of Ni from the viewpoint of a high capacity and decreasing a content rate of Co from the viewpoint of cost reduction decreases electron conductivity of the lithium-containing composite oxide itself, which may increase the battery resistance to decrease the output characteristics. The present inventors have made intensive investigation, and consequently found that both of the improvement of the output characteristics and the cost reduction may be achieved by regulating a composition of the lithium-containing composite oxide, setting an outer diameter of the battery to be greater than or equal to 25 mm, setting a basis weight of a positive electrode mixture layer to be greater than or equal to 250 g/m², and setting connection between a positive electrode and a sealing assembly to be a predetermined aspect. Regulating the composition of the lithium-containing composite oxide may improve the battery capacity and reduce the cost. By setting the connection between the positive electrode and the sealing assembly to be a predetermined aspect, the output characteristics of the secondary battery are improved. Furthermore, by setting the outer diameter of the battery to be greater than or equal to 25 mm and the basis weight of the positive electrode mixture layer to be greater than or equal to 250 g/m², the cost of the secondary battery may be reduced with having the above constitution. Here, the cost means expense per unit battery capacity for manufacturing the secondary battery.

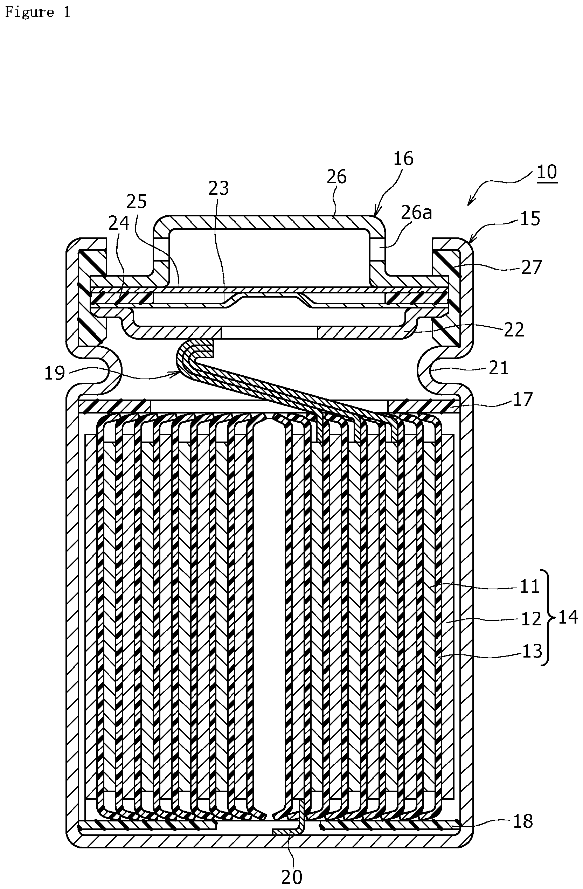

Hereinafter, an example of an embodiment of the non-aqueous electrolyte secondary battery according to the present disclosure will be described in detail with reference to FIG. 1 to FIG. 3. In the following description, specific shapes, materials, values, directions, and the like, which are examples for facilitating understanding of the present invention, may be appropriately modified with specifications of non-aqueous electrolyte secondary batteries. When a plurality of embodiments and modified examples are included in the following description, use in appropriate combination of characteristic portions thereof are anticipated in advance. When the term "substantially" is used herein, the term is used as the same meaning as the term "approximately", and the requirement "substantially" is satisfied by being virtually same.

FIG. 1 is a vertical cross-sectional view of a non-aqueous electrolyte secondary battery 10 of an example of an embodiment. In the secondary battery 10 illustrated in FIG. 1, an electrode assembly 14 and an electrolyte liquid (not illustrated) are housed in an exterior 15. The electrode assembly 14 has a wound structure in which a band-shaped positive electrode 11 and a band-shaped negative electrode 12 are wound with a separator 13 interposed therebetween. As a non-aqueous solvent (organic solvent) of the electrolyte liquid, any of carbonates, lactones, ethers, ketones, esters, and the like may be used, and two or more of these solvents may be mixed for use. When two or more of the solvents are mixed for use, a mixed solvent including a cyclic carbonate and a chain carbonate is preferably used. For example, ethylene carbonate (EC), propylene carbonate (PC), butylene carbonate (BC), or the like may be used as the cyclic carbonate, and dimethyl carbonate (DMC), ethyl methyl carbonate (EMC), diethyl carbonate (DEC), or the like may be used as the chain carbonate. As an electrolyte salt of the electrolyte liquid, LiPF₆, LiBF₄, LiCF₃SO₃, or the like, or a mixture thereof may be used. An amount of the electrolyte salt to be dissolved in the non-aqueous solvent may be, for example, greater than or equal to 0.5 mol/L and less than or equal to 2.0 mol/L. Hereinafter, for convenience of description, the side of the sealing assembly 16 will be described as the "upper side", and the bottom side of the exterior 15 will be described as the "lower side".

The opening of the upper end of the exterior 15 is sealed with the sealing assembly 16 to seal an inside of the secondary battery 10. Insulating plates 17 and 18 are provided on the upper and lower sides of the electrode assembly 14, respectively. Positive electrode leads 19 vertically extend through a through hole of the insulating plate 17, and connects a filter 22, which is a bottom plate of the sealing assembly 16, and the positive electrode 11 included in the electrode assembly 14. According to this, the positive electrode 11 and the sealing assembly 16 are connected, and in the secondary battery 10, a cap 26, which is a top plate of the sealing assembly 16 electrically connected to the filter 22, becomes a positive electrode terminal. The positive electrode lead 19 is an aluminum lead, for example. Meanwhile, a negative electrode lead 20 extends through a through hole of the insulating plate 18 toward a bottom side of the exterior 15, and is welded with an bottom inner surface of the exterior 15. According to this, the negative electrode 12 and the exterior 15 are connected, and in the secondary battery 10, the exterior 15 becomes a negative electrode terminal. The negative electrode lead 20 is a nickel lead, for example.

In the electrode assembly 14, three positive electrode leads 19 are drawn out. A number of the positive electrode leads 19 drawn out from the electrode assembly 14 may be greater than or equal to three. According to this, connecting resistance between the positive electrode 11 and the sealing assembly 16 may be reduced, and thereby the output characteristics of the secondary battery 10 may be improved. Since a larger number of the positive electrode leads 19 more reduces the connecting resistance but more increases the cost, the number of the positive electrode leads 19 is preferably greater than or equal to three and less than or equal to ten, more preferably greater than or equal to three and less than or equal to eight, and particularly preferably greater than or equal to three and less than or equal to six from the viewpoint of achievement of both of the effect of reducing the connecting resistance and the cost. The greater than or equal to three positive electrode leads 19 drawn out from the electrode assembly 14 may be directly connected to the sealing assembly 16, or may be connected to the sealing assembly 16 via a known current collecting member. A connection aspect between the negative electrode 12 and the exterior 15 are not particularly limited, and may be connected with a plurality of the negative electrode leads 20.

The exterior 15 has a bottomed cylindrical shape with greater than or equal to 25 mm in outer diameter. The outer diameter of the exterior 15 is preferably greater than or equal to 30 mm, and more preferably greater than or equal to 35 mm. The outer diameter of the exterior 15 may be greater than or equal to 38 mm, may be greater than or equal to 40 mm, may be greater than or equal to 45 mm, or may be greater than or equal to 50 mm. The outer diameter of the exterior 15 may be less than or equal to 60 mm, for example. Within this range, the cost may be reduced with keeping the output characteristics of the secondary battery 10. A thickness of the exterior 15 is, for example, greater than or equal to 0.1 mm and less than or equal to 2 mm. An inner diameter of the exterior 15 is preferably greater than or equal to 24 mm, more preferably greater than or equal to 29 mm, and particularly preferably greater than or equal to 34 mm. The inner diameter of the exterior 15 may be greater than or equal to 37 mm, may be greater than or equal to 39 mm, may be greater than or equal to 44 mm, or may be greater than or equal to 49 mm. The exterior 15 is, for example, a metallic exterior housing can. A gasket 27 is provided between the exterior 15 and the sealing assembly 16 to achieve sealability inside the secondary battery 10. The exterior 15 has a grooved portion 21 formed by, for example, pressing the side wall thereof from the outside to support the sealing assembly 16. The grooved portion 21 is preferably formed in a circular shape along a circumferential direction of the exterior 15, and supports the sealing assembly 16 with the upper face thereof.

The sealing assembly 16 has the filter 22, a lower vent member 23, an insulating member 24, an upper vent member 25, and the cap 26, which are stacked in this order from the electrode assembly 14 side. Each member constituting the sealing assembly 16 has, for example, a disk shape or a ring shape, and the members except for the insulating member 24 are electrically connected to each other. The lower vent member 23 and the upper vent member 25 are connected to each other at each of the centers, and the insulating member 24 is interposed between the circumferences. If the internal pressure of the battery increases due to abnormal heat generation, for example, the lower vent member 23 breaks and thereby the upper vent member 25 expands toward the cap 26 side to be separated from the lower vent member 23, resulting in breakage of electrical connection between both the members. If the internal pressure further increases, the upper vent member 25 breaks, and gas is discharged through an opening 26a of the cap 26.

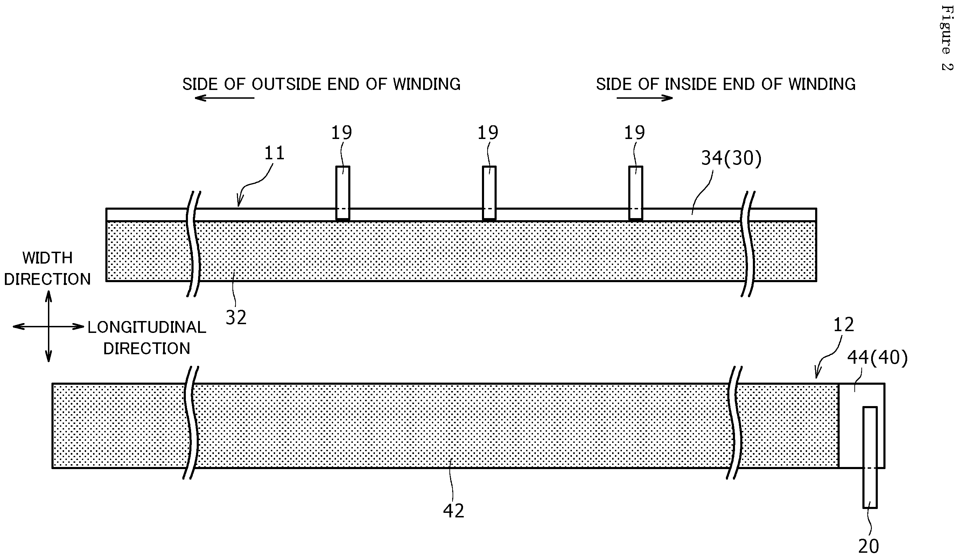

Next, the connection aspect between the positive electrode 11 and the positive electrode leads 19 will be described with reference to FIG. 2. FIG. 2 is a front view of the positive electrode 11 and the negative electrode 12 that constitute the electrode assembly 14 comprised in the secondary battery 10 in FIG. 1 in a developed state. The positive electrode 11 has a positive electrode current collector 30 and a positive electrode mixture layer 32 formed on a surface of the positive electrode current collector 30. The negative electrode 12 has a negative electrode current collector 40 and a negative electrode mixture layer 42 formed on a surface of the negative electrode current collector 40.

As illustrated in FIG. 2, the positive electrode 11 has a positive electrode current collector exposed portion 34 where the positive electrode current collector 30 is exposed on an upper end, and the positive electrode leads 19 may be connected to the positive electrode current collector exposed portion 34. This enables the positive electrode leads 19 to be stably connected to the positive electrode current collector 30, and may increase an area of the positive electrode mixture layer 32 with keeping an area of the positive electrode current collector exposed portion 34. Thus, the output characteristics of the secondary battery 10 may be improved.

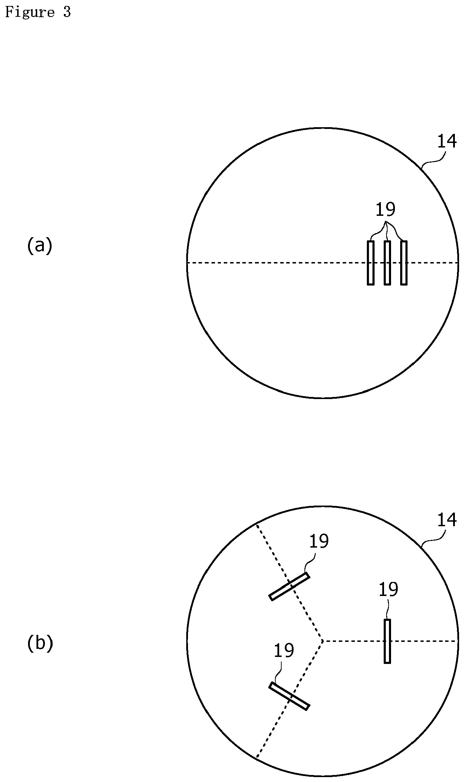

Next, arrangement of the positive electrode leads 19 will be described with reference to FIG. 3(a) and FIG. 3(b). FIG. 3(a) and FIG. 3(b) are both plane views illustrating a position where the positive electrode leads 19 are arranged in an upper surface of the electrode assembly 14.

The positive electrode leads 19 may be arranged in substantially one line in a radial direction, as illustrated in FIG. 3(a). This facilitates bundling of the positive electrode leads 19, and facilitates bonding of the positive electrode leads 19 to the filter 22. The positive electrode leads 19 may be bonded to the filter 22 at a plurality of positions.

The positive electrode leads 19 may be arranged with substantially same angles as illustrated in FIG. 3(b). This facilitates bonding to the filter 22 without obstruction of each of the plurality of the positive electrode leads 19 by the other positive electrode leads 19.

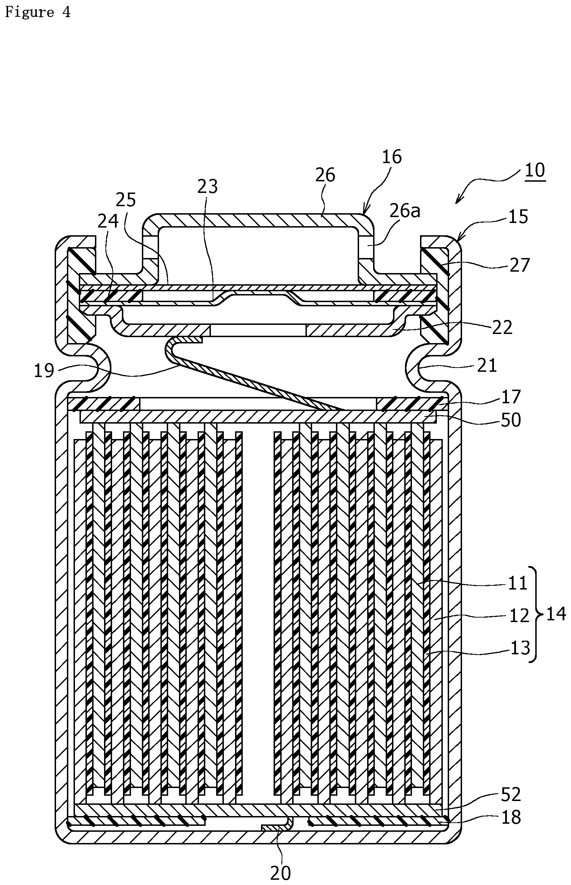

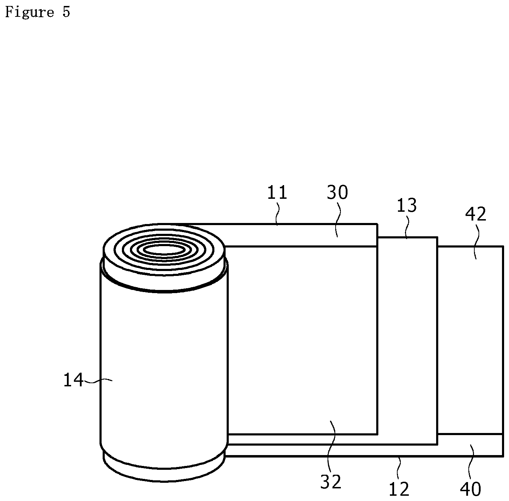

Hereinafter, another example of an embodiment of the non-aqueous electrolyte secondary battery according to the present disclosure will be described in detail with reference to FIG. 4 and FIG. 5. In the following embodiment, a same construction as in the embodiment illustrated in FIG. 1 is followed by a same sign as in the embodiment illustrated in FIG. 1 to omit the description. In the following embodiment, description about effects and modified examples same as in the embodiment illustrated in FIG. 1 will be omitted.

FIG. 4 is a view of the other example of the embodiment, which corresponds to FIG. 1. As illustrated in FIG. 4, the positive electrode 11 included in the electrode assembly 14 is connected to a positive electrode current collecting member 50, and the positive electrode current collecting member 50 and the sealing assembly 16 are connected with the positive electrode lead 19. This makes connection between the positive electrode 11 and the sealing assembly 16, and in the secondary battery 10, the cap 26, which is the top plate of the sealing assembly 16 electrically connected to the filter 22, becomes the positive electrode terminal. The negative electrode 12 included in the electrode assembly 14 is connected to a negative electrode current collecting member 52, and the negative electrode current collecting member 52 and the exterior 15 are connected with the negative electrode lead 20. This makes connection between the negative electrode 12 and the exterior 15, and in the secondary battery 10, the exterior 15 becomes the negative electrode terminal. The connection aspect between the negative electrode 12 and the exterior 15 is not particularly limited, and may be connected with the negative electrode lead 20, similarly to the embodiment illustrated in FIG. 1, for example.

A material, shape, and the like of the positive electrode current collecting member 50 are not particularly limited as long as it is connectable to the positive electrode 11 and the sealing assembly 16. For example, the positive electrode current collecting member 50 may be a disk-shaped member made of aluminum. The positive electrode current collecting member 50 may have a hole or a plurality of holes at any position from the viewpoints of circulation of the electrolyte liquid, and the like. A material, shape, and the like of the negative electrode current collecting member 52 are not particularly limited as long as it is connectable to the negative electrode 12 and the exterior 15. For example, the negative electrode current collecting member 52 may be a disk-shaped member made of nickel. The negative electrode current collecting member 52 may have a hole or a plurality of holes at any position from the viewpoints of circulation of the electrolyte liquid, and the like.

Next, constitution of the electrode assembly 14 will be described with reference to FIG. 5. FIG. 5 is a perspective view of the electrode assembly 14 of the secondary battery 10 illustrated in FIG. 4, and is a view illustrating constitution of the positive electrode 11, negative electrode 12, and separator 13 in a state where a proximity of an outside end of winding is developed. In the electrode assembly 14, the positive electrode 11 protrudes above the negative electrode 12 and the separator 13. This connects the positive electrode 11 to the positive electrode current collecting member 50. As illustrated in FIG. 5, the positive electrode 11 may have the positive electrode current collector exposed portion 34 where the positive electrode current collector 30 is exposed on the upper end. This may more certainly make the connection between the positive electrode 11 and the positive electrode current collecting member 50. Meanwhile, the negative electrode 12 protrudes below the positive electrode 11 and the separator 13. This connects the negative electrode 12 to the negative electrode current collecting member 52. As illustrated in FIG. 5, the negative electrode 12 may have the positive electrode current collector exposed portion 44 where negative electrode current collector 40 is exposed on the lower end. This may more certainly make the connection between the negative electrode 12 and the negative electrode current collecting member 52.

Hereinafter, the positive electrode 11, negative electrode 12, and separator 13, which constitute the electrode assembly 14, particularly the positive electrode 11, will be described in detail. The positive electrode 11, the negative electrode 12, and the separator 13, described hereinafter, are applicable for any of the aforementioned embodiments.

### [Positive Electrode]

The positive electrode 11 has the positive electrode current collector 30 and the positive electrode mixture layer 32 formed on the surface of the positive electrode current collector 30. The positive electrode mixture layer 32 is preferably formed on both surfaces of the positive electrode current collector 30. For the positive electrode current collector 30, a foil of a metal stable within a potential range of the positive electrode 11, such as aluminum and an aluminum alloy, a film in which such a metal is disposed on a surface layer thereof, and the like may be used. The positive electrode mixture layer 32 includes a positive electrode active material and a conductive agent. The positive electrode 11 may be produced by, for example, applying a positive electrode slurry including the positive electrode active material, the conductive agent, and the like on the surface of the positive electrode current collector 30, and drying and subsequently compressing the coating to form the positive electrode mixture layers 32 on both the surfaces of the positive electrode current collector 30.

A basis weight of the positive electrode mixture layer 32 is greater than or equal to 250 g/m². This may reduce the cost of the secondary battery 10. The basis weight of the positive electrode mixture layer 32 may be less than or equal to 400 g/m². A thickness of the positive electrode mixture layer 32 is, for example, greater than or equal to 10 µm and less than or equal to 150 µm in one side of the positive electrode current collector 30.

The conductive agent included in the positive electrode mixture layer 32 includes carbon fiber. A content of the carbon fiber in the positive electrode mixture layer 32 may be greater than or equal to 0.01 part by mass and less than or equal to 1 part by mass relative to 100 parts by mass of the positive electrode active material. The predetermined amount of the carbon fiber included in the positive electrode mixture layer 32 is considered to achieve a conductive path in the positive electrode mixture layer 32 to contribute to improvement of the durability. A content of the carbon fiber of less than 0.01 part by mass fails to sufficiently achieve the conductive path in the positive electrode mixture layer 32, and a content of the carbon fiber of greater than 1 part by mass is likely to inhibit move of the electrolyte liquid in the positive electrode mixture layer 32. In both the cases, the durability is likely to be deteriorated.

Examples of the carbon fiber include known materials used as a conductive agent of a battery, and include carbon nanotube (CNT), carbon nanofiber (CNF), vapor-grown carbon fiber (VGCF), electrospinning carbon fiber, polyacrylonitrile (PAN)-based carbon fiber, and pitch-based carbon fiber.

An outermost circumference of the carbon fiber is, for example, preferably greater than or equal to 1 nm and less than or equal to 20 nm, and more preferably greater than or equal to 1.5 nm and less than or equal to 10 nm from the viewpoints of improvement of conductivity of the carbon fiber itself, achievement of the conductive path in the positive electrode mixture layer 32 by adding a small amount of the carbon fiber with the improved conductivity, and the like. The outermost circumference of the carbon fiber is an average value of outer circumferences of 50 random carbon fibers measured with a field emission scanning electron microscope (FE-SEM) or a transmission electron microscope (TEM).

A fiber length of the carbon fiber is, for example, preferably greater than or equal to 0.1 µm and less than or equal to 20 µm, more preferably greater than or equal to 1 µm and less than or equal to 10 µm, and particularly preferably greater than or equal to 1 µm and less than or equal to 5 µm in order to achieve a conductive path between the active materials in the positive electrode mixture layer 32. The fiber length of the carbon fiber is an average value of lengths of 50 random carbon fibers measured with a field emission scanning electron microscope (FE-SEM).

Among the carbon fiber exemplified above, the carbon fiber preferably includes carbon nanotube in terms of, for example, more inhibition of a capacity decrease with charge-discharge cycle, and the like. Examples of the carbon nanotube include a single-wall carbon nanotube, a double-wall carbon nanotube, and a multiwall carbon nanotube. The single-wall carbon nanotube (SWCNT) is a carbon nanostructure in which one graphene sheet constitutes one cylindrical shape. The double-wall carbon nanotube is a carbon nanostructure in which two graphene sheets are concentrically stacked to constitute one cylindrical shape. The multiwall carbon nanotube is a carbon nanostructure in which greater than or equal to three graphene sheets are concentrically stacked to constitute one cylindrical shape. The graphene sheet refers to a layer in which carbon atoms with an sp2 hybrid orbital constituting crystals of graphite are positioned at vertexes of a regular hexagon. A shape of the carbon nanotube is not limited. Examples of such shapes include various forms including needle, cylindrical tube, fishbone (or cup-like stacked), card-like (platelet), and coil-like shapes.

The carbon nanotube included in the positive electrode mixture layer 32 preferably includes the single-wall carbon nanotube. The single-wall carbon nanotube typically forms the conductive path in the positive electrode mixture layer 32 at a smaller amount than the multiwall carbon nanotube, and thereby it is considered that a small amount of the single-wall carbon nanotube included in the positive electrode mixture layer 32 facilitates move of the non-aqueous solvent and the electrolyte in the positive electrode mixture layer 32. The positive electrode mixture layer 32 may include not only the single-wall carbon nanotube but also the double-wall carbon nanotube and the multiwall carbon nanotube.

The conductive agent included in the positive electrode mixture layer 32 includes amorphous carbon. Examples of the amorphous carbon include carbon materials such as carbon black (CB), acetylene black (AB), Ketjenblack, and graphite. These may be used singly, or may be used in combination of two or more thereof. A content of the amorphous carbon in the positive electrode mixture layer 32 may be greater than or equal to 1 part by mass and less than or equal to 3 parts by mass relative to 100 parts by mass of the positive electrode active material. Setting the content of the amorphous carbon included in the positive electrode mixture layer 32 to be the predetermined amount may increase the conductivity between particles of the positive electrode active material and improve the output characteristics of the battery.

The positive electrode active material included in the positive electrode mixture layer 32 includes a lithium-containing composite oxide. The lithium-containing composite oxide is of, for example, secondary particles each formed by aggregation of a plurality of primary particles. A particle diameter of the primary particles constituting the secondary particles is, for example, greater than or equal to 0.05 µm and less than or equal to 1 µm. The particle diameter of the primary particle is measured as a diameter of a circumscribed circle in a particle image observed with a scanning electron microscope (SEM).

A median diameter (D50) on a volumetric basis of the secondary particles of the lithium-containing composite oxide is, for example, greater than or equal to 1 µm and less than or equal to 30 µm, and preferably greater than or equal to 3 µm and less than or equal to 20 µm. The D50 means a particle diameter at which a cumulative frequency is 50% from a smaller particle diameter side in a particle size distribution on a volumetric basis. The particle size distribution of the composite oxide (Z) may be measured by using a laser diffraction-type particle size distribution measuring device (for example, MT3000II, manufactured by MicrotracBEL Corp.) with water as a dispersion medium.

The lithium-containing composite oxide has a layered rock-salt structure. The layered rock-salt structure of the lithium-containing composite oxide belongs to, for example, the space group R-3m, the space group C2/m, or the like. In terms of increasing the capacity, stability of the crystal structure, and the like, the lithium-containing composite oxide preferably has a layered rock-salt structure belonging to the space group R-3m. The layered rock-salt structure of the lithium-containing composite oxide may include a transition metal layer, a Li layer, and an oxygen layer.

The lithium-containing composite oxide contains substantially no Co, and contains at least Ni and Mn. Here, "containing substantially no Co" refers to the lithium-containing composite oxide containing only less than or equal to 0.01 mol% of Co relative to a total amount of metal elements excluding Li. Since Co is expensive, containing substantially no Co may reduce the material cost.

The content rate of Ni in the lithium-containing composite oxide is preferably greater than or equal to 70 mol%, and more preferably greater than or equal to 70 mol% and less than or equal to 95 mol% relative to the total number of moles of the metal elements excluding Li. This yields a battery with a high capacity. The rate of Ni relative to the total number of moles of the metal elements excluding Li in the lithium-containing composite oxide is particularly preferably greater than or equal to 80 mol%. This yields a battery with a higher capacity. Although a high content rate of Ni typically causes a risk of a decrease in safety, containing Mn may improve the safety. In addition, Mn is an inexpensive element. Thus, even with a high content rate of Ni, a low-cost high-capacity battery may be obtained without a decrease in the safety of the battery.

The lithium-containing composite oxide may be a composite oxide represented by the general formula LiₐNiₓAl_{y}Mn_{z}M1_{w}O_{2-b}, wherein 0.95 ≤ a ≤ 1.05, 0.7 ≤ x ≤ 0.95, 0 ≤ y ≤ 0.1, 0 ≤ z ≤ 0.3, 0 ≤ w ≤ 0.1, 0 ≤ b ≤ 0.05, x+y+z+w =1, and M1 includes at least one element selected from the group consisting of Fe, Ti, Si, Nb, Zr, Mo, W, and Zn. The positive electrode active material may include a lithium-containing composite oxide other than that represented by the above general formula or another compound within a range not impairing the object of the present disclosure. The mole fractions of the metal elements contained in entire particles of the lithium-containing composite oxide are measured by inductively coupled plasma (ICP) atomic emission spectrometry.

The lithium-containing composite oxide may have a chalcogen compound such as an oxide, a sulfate salt, and a niobate salt, and a halogen compound such as a fluoride, attached on a surface of thereof. This may stabilize a surface state of the lithium-containing composite oxide with an electronic interaction. An amount of the chalcogen compound and the halogen compound adhering to the surface of the lithium-containing composite oxide is preferably greater than or equal to 0.05 mol% and less than or equal to 0.50 mol% relative to the total number of moles of the metal elements excluding Li in the lithium-containing composite oxide. Examples of the chalcogen compound include CaO, SrO, Al₂O₃, ZrO₂, TiO₂, Li₂SO₄, LiNbO₃, CaTiO₃, BaTiO₃, Li₃BO₃, Li₂WO₄, Li₄WO₅, and Li₆W₂O₉. Examples of the halogen compound include LiF.

The surface of the lithium-containing composite oxide on which the chalcogen compound or the halogen compound is attached means surfaces of the secondary particles of the lithium-containing composite oxide. The chalcogen compound and the halogen compound may be attached on surfaces of the primary particles of the lithium-containing composite oxide. The chalcogen compound and the halogen compound may be present uniformly on an entirety of the surface of the lithium-containing composite oxide, or may be present on a part thereof, for example. The presence of the chalcogen compound and the halogen compound on the surface of the lithium-containing composite oxide may be confirmed by energy dispersive X-ray spectrometry (TEM-EDX).

Next, an example of a method for manufacturing the positive electrode active material will be described.

The method for manufacturing the positive electrode active material includes: a first step of obtaining a composite oxide including Ni and optional metal elements; a second step of obtaining a mixture by mixing the composite oxide obtained in the first step and a Li compound; and a third step of calcining the mixture, for example.

In the first step, for example, with stirring a solution of metal salts including essential metal elements of Ni and Mn, and optional metal elements such as Al, a solution of an alkali such as sodium hydroxide is added dropwise in order to adjust a pH on the alkaline side (for example, greater than or equal to 8.5 and less than or equal to 12.5) to precipitate (coprecipitate) a composite hydroxide including Ni, Mn, and the optional metal elements. This composite hydroxide may be calcined to obtain a composite oxide including Ni, Mn, and the optional metal elements. The calcining temperature is not particularly limited, and may be, for example, within a range of greater than or equal to 300°C and less than or equal to 600°C.

In the second step, the composite oxide obtained in the first step and the Li raw material may be mixed to obtain the mixture. Examples of the Li raw material include Li₂CO₃, LiOH, Li₂O₂, Li₂O, LiNO₃, LiNO₂, Li₂SO₄, LiOH·H₂O, LiH, and LiF. A mixing ratio between the composite oxide and the Li raw material is appropriately decided so that each element in the finally obtained lithium-containing composite oxide has a desired rate. A mole ratio of Li to the metal elements excluding Li is preferably a mole ratio of the metal elements excluding Li : Li being within a range of greater than or equal to 1:0.9 and less than or equal to 1:1.3. In the second step, when the composite oxide obtained in the first step and the Li compound are mixed, a raw material of the chalcogen compound or halogen compound to be attached on the surface of the lithium-containing composite oxide may be mixed. Examples of the chalcogen compound raw material include Ca(OH)₂, CaO, CaCO₃, CaSO₄, Ca(NO₃)₂, Sr(OH)₂, Sr(OH)₂·8H₂O, SrO, SrCO₃, SrSO₄, Sr(NO₃)₂, Al(OH)₃, Al₂O₃, Zr(OH)₄, ZrO₂, Ti(OH)₄, TiO₂, and Nb(OH)s. Examples of the halogen compound raw material include LiF and CaF₂.

In the third step, the mixture obtained in the second step may be calcined under an oxygen atmosphere to obtain the lithium-containing composite oxide according to the present embodiment. In the third step, a heating rate within greater than or equal to 450°C and less than or equal to 680°C may be within a range of greater than 0.1 °C/min and less than or equal to 5.5 °C/min, and a highest reaching temperature may be within a range of greater than or equal to 700°C and less than or equal to 850°C. A heating rate from greater than 680°C to the highest reaching temperature may be, for example, greater than or equal to 0.1 °C/min and less than or equal to 3.5 °C/min. A holding time at the highest reaching temperature may be greater than or equal to 1 hour and less than or equal to 10 hours. The third step may be a multi-step calcination, and a plurality of the first heating rates and the second heating rates may be set in each temperature range as long as the first heating rates and the second heating rates are within the above determined ranges.

In the manufacturing method of the present embodiment, the powder of the lithium-containing composite oxide obtained in the third step may be washed with water in order to improve the battery capacity and safety. This washing with water may be performed by a known method under known conditions, and performed within a range not causing elution of lithium from the lithium-containing composite oxide to deteriorate battery characteristics.

For Li₂SO₄, Li₃BO₃, Li₂WO₄, Li₄WO₅, and Li₆W₂O₉ among the chalcogen compounds and AlF₃ among the halogen compounds, a powder of the lithium-containing composite oxide obtained in the third step may be coat-treated by a known method under known conditions to obtain a lithium-containing composite oxide having Li₂SO₄ or AlF₃ on the surface of the lithium-containing composite oxide.

The positive electrode mixture layer 32 may further contain Li₂NiO₂. Li₂NiO₂ contains much Li, and functions as a Li-supplying agent to supply Li ions to the negative electrode 12 during an initial charge and discharge. Li₂NiO₂ may have structure identified with the space group Immm.

A mass of Li₂NiO₂ included in the positive electrode mixture layer 32 may be greater than or equal to 1 part by mass and less than or equal to 10 parts by mass relative to 100 parts by mass of the positive electrode active material included in the positive electrode mixture layer 32. The mass of Li₂NiO₂ included in the positive electrode mixture layer 32 of greater than or equal to 1 part by mass may supply a sufficient amount of Li ions to the negative electrode. As described later, at least a part of Li₂NiO₂ changes to a compound represented by the general formula LiₐNi₂₋ₐO₂ (0 < a ≤ 0.5). If the mass of Li₂NiO₂ included in the positive electrode mixture layer 32 is greater than 10 parts by mass, the battery capacity decreases because the compound represented by the general formula LiₐNi₂₋ₐO₂ (0 < a ≤ 0.5) less contributes to the charge-discharge capacity than the lithium-containing composite oxide.

A part or all of Li₂NiO₂ after initial charge and discharge changes to the compound represented by the general formula LiₐNi₂₋ₐO₂ (0 < a ≤ 0.5), for example. That is, the positive electrode mixture layer 32 may further contain the compound represented by the general formula LiₐNi₂₋ₐO₂ (0 < a ≤ 0.5). The compound represented by LiₐNi₂₋ₐO₂ (0 < a ≤ 0.5) releases and occludes Li ions in charge and discharge to function as the positive electrode active material.

A mass of the compound represented by LiₐNi₂₋ₐO₂ (0 < a ≤ 0.5) included in the positive electrode mixture layer 32 may be greater than or equal to 0.1 part by mass and less than or equal to 5 parts by mass relative to 100 parts by mass of the positive electrode active material included in the positive electrode mixture layer 32. When the mass of the compound represented by the general formula LiₐNi₂₋ₐO₂ (0 < a ≤ 0.5) included in the positive electrode mixture layer 32 is greater than or equal to 0.1 part by mass, a sufficient amount of Li ions may be supplied to the negative electrode. If the mass of the compound represented by the general formula LiₐNi₂₋ₐO₂ (0 < a ≤ 0.5) included in the positive electrode mixture layer 32 is greater than 5 parts by mass, the battery capacity decreases because the compound represented by the general formula LiₐNi₂₋ₐO₂ (0 < a ≤ 0.5) less contributes to the charge-discharge capacity than the lithium-containing composite oxide.

The positive electrode mixture layer 32 may further include a binder. Examples of the binder include a fluorine-based polymer and a rubber polymer. Examples of the fluorine-based polymer include polytetrafluoroethylene (PTFE), polyvinylidene fluoride (PVdF), or modified derivatives thereof. Examples of the rubber polymer include an ethylene-propylene-isoprene copolymer and an ethylene-propylene-butadiene copolymer. These may be used singly, or may be used in combination of two or more thereof.

### [Negative Electrode]

The negative electrode 12 has the negative electrode current collector 40 and the negative electrode mixture layer 42 formed on the surface of the negative electrode current collector 40. The negative electrode mixture layer 42 is preferably formed on both surfaces of the negative electrode current collector 40. For the negative electrode current collector 40, a foil of a metal stable within a potential range of the negative electrode 12, such as copper and a copper alloy, a film in which such a metal is disposed on a surface layer thereof, and the like may be used. The negative electrode mixture layer 42 may include a negative electrode active material, a binder, and the like. The negative electrode 12 may be produced by, for example, applying a negative electrode mixture slurry including the negative electrode active material, the binder, and the like on the surface of the negative electrode current collector 40, and drying and subsequently compressing the coating to form the negative electrode mixture layers 42 on both the surfaces of the negative electrode current collector 40.

The negative electrode active material included in the negative electrode mixture layer 42 is not particularly limited as long as it may reversibly occlude and release lithium ions, and carbon materials such as graphite are typically used. The graphite may be any of natural graphite such as flake graphite, massive graphite, and amorphous graphite, and artificial graphite such as massive artificial graphite and graphitized mesophase carbon microbead. As the negative electrode active material, a metal that forms an alloy with Li, such as Si and Sn, a metal compound including Si, Sn, and the like, a lithium-titanium composite oxide, and the like may also be used. In addition, those in which a carbon coating is provided on these materials may also be used. For example, a Si-containing compound represented by SiOₓ (0.5 ≤ x ≤ 1.6), a Si-containing compound in which Si fine particles are dispersed in a lithium silicate phase represented by Li_{2y}SiO_{(2+y)} (0 < y < 2), or the like may be used in combination with the graphite.

For the binder included in the negative electrode mixture layer 42, a fluororesin, PAN, a polyimide, an acrylic resin, a polyolefin, and the like may be used as in the case of the positive electrode 11, but styrene-butadiene rubber (SBR) is preferably used. The negative electrode mixture layer 42 may include CMC or a salt thereof, polyacrylic acid (PAA) or a salt thereof, polyvinyl alcohol (PVA), and the like.

### [Separator]

For the separator 13, a porous sheet having an ion permeation property and an insulation property is used, for example. Specific examples of the porous sheet include a fine porous thin film, a woven fabric, and a nonwoven fabric. As a material for the separator, a polyolefin such as polyethylene and polypropylene, cellulose, and the like are suitable. The separator 13 may have a single-layered structure, or may have a stacked structure. On a surface of the separator 13, a resin layer having high heat resistance, such as an aramid resin, and a filler layer including a filler of an inorganic compound may be provided.

### EXAMPLES

Hereinafter, the present disclosure will be further described with Examples and Comparative Examples, but the present disclosure is not limited to the following Examples.

### [Production of Positive Electrode Active Material]

### <Example 1>

A composite hydroxide obtained by a coprecipitation method and represented by [Ni_{0.70}Al_{0.06}Mn_{0.24}](OH)₂ was calcined at 500°C for 8 hours to obtain a composite oxide (Ni_{0.70}Al_{0.06}Mn_{0.24}O₂) (the first step). Then, LiOH and the composite oxide were mixed so that a mole ratio between Li and a total amount of Ni, Al, and Mn was 1.03: 1 to obtain a mixture (the second step). This mixture was calcined under an oxygen flow with an oxygen concentration of 95% (a flow rate of 2 mL/min per 10 cm³ and 5 L/min per kilogram of the mixture) at a heating rate of 2.0 °C/min from a room temperature to 650°C, and then calcined at a heating rate of 0.5 °C/min from 650°C to 780°C to obtain a positive electrode active material (the third step). The above positive electrode active material was analyzed with an ICP atomic emission spectrometer to confirm that the positive electrode active material was a lithium-containing composite oxide represented by LiNi_{0.70}Al_{0.06}Mn_{0.24}O₂.

### [Production of Positive Electrode]

Mixing 100 parts by mass of the positive electrode active material, 0.1 part by mass of carbon nanotube (outermost circumference (φ): 1.5 nm, fiber length (L): 12 µm) as a conductive agent, and 2 parts by mass of polyvinylidene fluoride as a binder was performed, and this mixture and N-methyl-2-pyrrolidone (NMP) were mixed to prepare a positive electrode slurry. Then, this slurry was applied on a positive electrode current collector composed of aluminum foil with 15 µm in thickness so that a basis weight was 250 g/m², the coating was dried and subsequently rolled with a roller, and the rolled product was cut to a predetermined electrode size to be housed in an exterior with φ50 mm in outer diameter to obtain a positive electrode in which positive electrode mixture layers were formed on both surfaces of the positive electrode current collector. An exposed portion where a surface of the positive electrode current collector was exposed was provided on an upper end of the positive electrode.

### [Production of Negative Electrode]

As a negative electrode active material, natural graphite was used. The negative electrode active material, sodium carboxymethylcellulose (CMC-Na), and styrene-butadiene rubber (SBR) were mixed at a solid-content mass ratio of 100:1:1 in an aqueous solution to prepare a negative electrode slurry. This negative electrode slurry was applied on both surfaces of a negative electrode current collector composed of copper foil, the coating was dried and subsequently rolled by using a roller, and the rolled product was cut to the predetermined electrode size to obtain a negative electrode in which negative electrode mixture layers were formed on both the surfaces of the negative electrode current collector. An exposed portion where a surface of the negative electrode current collector was exposed was provided on an inside end of winding of the negative electrode.

### [Preparation of Non-Aqueous Electrolyte]

Ethylene carbonate (EC), methyl ethyl carbonate (MEC), and dimethyl carbonate (DMC) were mixed at a volume ratio of 3:3:4. Into this mixed solvent, lithium hexafluorophosphate (LiPF₆) was dissolved so that the concentration was 1.2 mol/L to prepare a non-aqueous electrolyte.

### [Production of Test Cell]

As illustrated in FIG. 3(a), six aluminum leads were attached to the exposed portion of the positive electrode with substantially same intervals so that the aluminum leads were arranged in substantially one line in a radial direction of an electrode assembly. One nickel lead was attached to the exposed portion of the negative electrode. The positive electrode and the negative electrode were spirally wound with a separator made of a polyolefin interposed therebetween to produce a wound electrode assembly. This electrode assembly was housed inside an exterior with 50 mm in outer diameter, the non-aqueous electrolyte was injected, and then an upper opening of the exterior was sealed with a sealing assembly to obtain a test cell.

### [Evaluation of Cost]

A cost of the test cell was evaluated. The cost refers to expense per unit battery capacity. Under a temperature environment of 25°C, the battery capacity was evaluated by: charging the test cell at a constant current of 0.3 It until a battery voltage reached 4.2 V; charging the test cell at a constant voltage of 4.2 V until a current value reached 1/50 It; and then discharging the test cell at a constant current of 0.5 It until the battery voltage reached 2.5 V. The expense was calculated from expense of the materials of the test cell.

### [Measurement of Internal Resistance]

Under a temperature condition of 25°C, the test cell was charged at a constant current of 0.3 It until a cell voltage reached 4.2 V, and then charged at a constant voltage of 4.2 V until a current value reached 1/50 It. Subsequently, the test cell was discharged at a constant current of 1.0 It for 10 seconds, and a voltage dropped at this time was divided by the current value to determine an internal resistance.

### <Example 2>

A test cell was obtained in the same manner as in Example 1 except that: in the production of the positive electrode active material, the composition of the lithium-containing composite oxide was LiNi_{0.75}Mn_{0.25}O₂; in the production of the positive electrode, the conductive agent was changed from 0.1 part by mass of carbon nanotube to 1.5 parts by mass of acetylene black, the positive electrode slurry was applied so that the basis weight was 275 g/m², and the rolled product was cut to a predetermined electrode size to be housed in an exterior with φ45 mm in outer diameter to obtain a positive electrode; and in the production of the test cell, as illustrated in FIG. 4, the positive electrode and the sealing assembly were connected via a positive electrode current collecting member, the negative electrode and the exterior were connected via a negative electrode current collecting member, and the electrode assembly was housed in the exterior with φ45 mm in outer diameter.

### <Example 3>

A test cell was obtained in the same manner as in Example 1 except that: in the production of the positive electrode active material, the composition of the lithium-containing composite oxide was LiNi_{0.80}Mn_{0.20}O₂; in the production of the positive electrode, the positive electrode slurry was applied so that the basis weight was 300 g/m², and the rolled product was cut to a predetermined electrode size to be housed in an exterior with φ40 mm in outer diameter to obtain a positive electrode; and in the production of the test cell, as illustrated in FIG. 3(b), three aluminum leads were arranged with substantially same angles, and the electrode assembly was housed in the exterior with φ40 mm in outer diameter.

### <Example 4>

A test cell was obtained in the same manner as in Example 1 except that: in the production of the positive electrode active material, the composition of the lithium-containing composite oxide was LiNi_{0.80}Al_{0.055}Mn_{0.145}O₂; in the production of the positive electrode, the positive electrode slurry was applied so that the basis weight was 325 g/m²; and in the production of the test cell, the number of the aluminum leads was changed to three.

### <Example 5>

A test cell was obtained in the same manner as in Example 1 except that: in the production of the positive electrode active material, the composition of the lithium-containing composite oxide was LiNi_{0.85}Al_{0.06}Mn_{0.09}O₂; in the production of the positive electrode, the positive electrode slurry was applied so that the basis weight was 350 g/m², and the rolled product was cut to a predetermined electrode size to be housed in an exterior with φ45 mm in outer diameter to obtain a positive electrode; and in the production of the test cell, as illustrated in FIG. 4, the positive electrode and the sealing assembly were connected via a positive electrode current collecting member, the negative electrode and the exterior were connected via a negative electrode current collecting member, and the electrode assembly was housed in the exterior with φ45 mm in outer diameter.

### <Example 6>

A test cell was obtained in the same manner as in Example 1 except that: in the production of the positive electrode active material, the composition of the lithium-containing composite oxide was LiNi_{0.90}Al_{0.05}Mn_{0.05}O₂; in the production of the positive electrode, the conductive agent was changed form 0.1 part by mass of carbon nanotube to 1.5 parts by mass of acetylene black, 5 parts by mass of Li₂NiO₂ was further added to produce a positive electrode slurry, and the rolled product was cut to a predetermined electrode size to be housed in an exterior with φ40 mm in outer diameter to obtain a positive electrode; and in the production of the test cell, the number of the aluminum leads was changed to four, and the electrode assembly was housed in the exterior with φ40 mm in outer diameter.

### <Example 7>

A test cell was obtained in the same manner as in Example 1 except that: in the production of the positive electrode active material, the composition of the lithium-containing composite oxide was LiNi_{0.925}Al_{0.055}Mn_{0.02}O₂; in the production of the positive electrode, 5 parts by mass of Li₂NiO₂ was further added to produce a positive electrode slurry, the positive electrode slurry was applied so that the basis weight was 300 g/m², and the rolled product was cut to a predetermined electrode size to be housed in an exterior with φ35 mm in outer diameter to obtain a positive electrode; and in the production of the test cell, as illustrated in FIG. 4, the positive electrode and the sealing assembly were connected via a positive electrode current collecting member, the negative electrode and the exterior were connected via a negative electrode current collecting member, and the electrode assembly was housed in the exterior with φ35 mm in outer diameter.

### <Example 8>

A test cell was obtained in the same manner as in Example 1 except that: in the production of the positive electrode active material, the composition of the lithium-containing composite oxide was LiNi_{0.925}Al_{0.05}Mn_{0.025}O; in the production of the positive electrode, the positive electrode slurry was applied so that the basis weight was 325 g/m²; and in the production of the test cell, as illustrated in FIG. 4, the positive electrode and the sealing assembly were connected via a positive electrode current collecting member, and the negative electrode and the exterior were connected via a negative electrode current collecting member.

### <Comparative Example 1>

A test cell was obtained in the same manner as in Example 1 except that, in the production of the test cell, the number of the aluminum leads was changed to one.

### <Comparative Example 2>

A test cell was obtained in the same manner as in Example 1 except that, in the production of the positive electrode, the positive electrode slurry was applied so that the basis weight was 200 g/m².

### <Comparative Example 3>

A test cell was obtained in the same manner as in Example 1 except that: in the production of the positive electrode, the rolled product was cut to a predetermined electrode size to be housed in an exterior with φ18 mm in outer diameter to obtain a positive electrode; and in the production of the test cell, the electrode assembly was housed in the exterior with φ18 mm in outer diameter.

### <Comparative Example 4>

A test cell was obtained in the same manner as in Example 2 except that, in the production of the test cell, the connection aspects between the positive electrode and the sealing assembly and between the negative electrode and the exterior were changed from the aspect illustrated in FIG. 4 to the aspect illustrated in FIG. 3(a), and the number of the positive electrode leads was changed to one.

### <Comparative Example 5>

A test cell was obtained in the same manner as in Example 2 except that, in the production of the positive electrode, the positive electrode slurry was applied so that the basis weight was 190 g/m².

### <Comparative Example 6>

A test cell was obtained in the same manner as in Example 2 except that: in the production of the positive electrode, the rolled product was cut to a predetermined electrode size to be housed in an exterior with φ21 mm in outer diameter to obtain a positive electrode; and in the production of the test cell, the electrode assembly was housed in the exterior with φ21 mm in outer diameter.

### <Comparative Example 7>

A test cell was obtained in the same manner as in Example 3 except that, in the production of the test cell, the number of the aluminum leads was changed to one.

### <Comparative Example 8>

A test cell was obtained in the same manner as in Example 3 except that, in the production of the positive electrode, the positive electrode slurry was applied so that the basis weight was 200 g/m².

### <Comparative Example 9>

A test cell was obtained in the same manner as in Example 3 except that: in the production of the positive electrode, the rolled product was cut to a predetermined electrode size to be housed in an exterior with φ21 mm in outer diameter to obtain a positive electrode; and in the production of the test cell, the electrode assembly was housed in the exterior with φ21 mm in outer diameter.

### <Comparative Example 10>

A test cell was obtained in the same manner as in Example 4 except that, in the production of the test cell, the number of the aluminum leads was changed to one.

### <Comparative Example 11>

A test cell was obtained in the same manner as in Example 4 except that, in the production of the positive electrode, the positive electrode slurry was applied so that the basis weight was 200 g/m².

### <Comparative Example 12>

A test cell was obtained in the same manner as in Example 4 except that: in the production of the positive electrode, the rolled product was cut to a predetermined electrode size to be housed in an exterior with φ21 mm in outer diameter to obtain a positive electrode; and in the production of the test cell, the electrode assembly was housed in the exterior with φ21 mm in outer diameter.

### <Comparative Example 13>

A test cell was obtained in the same manner as in Example 5 except that, in the production of the test cell, the connection aspects between the positive electrode and the sealing assembly and between the negative electrode and the exterior were changed from the aspect illustrated in FIG. 4 to the aspect illustrated in FIG. 3(a), and the number of the positive electrode leads was changed to one.

### <Comparative Example 14>

A test cell was obtained in the same manner as in Example 5 except that, in the production of the positive electrode, the positive electrode slurry was applied so that the basis weight was 225 g/m².

### <Comparative Example 15>

A test cell was obtained in the same manner as in Example 5 except that: in the production of the positive electrode, the rolled product was cut to a predetermined electrode size to be housed in an exterior with φ21 mm in outer diameter to obtain a positive electrode; and in the production of the test cell, the electrode assembly was housed in the exterior with φ21 mm in outer diameter.

### <Comparative Example 16>

A test cell was obtained in the same manner as in Example 6 except that, in the production of the test cell, the number of the aluminum leads was changed to one.

### <Comparative Example 17>

A test cell was obtained in the same manner as in Example 6 except that, in the production of the positive electrode, the positive electrode slurry was applied so that the basis weight was 225 g/m².

### <Comparative Example 18>

A test cell was obtained in the same manner as in Example 6 except that: in the production of the positive electrode, the rolled product was cut to a predetermined electrode size to be housed in an exterior with φ18 mm in outer diameter to obtain a positive electrode; and in the production of the test cell, the electrode assembly was housed in the exterior with φ18 mm in outer diameter.

### <Comparative Example 19>

A test cell was obtained in the same manner as in Example 7 except that, in the production of the test cell, the connection aspects between the positive electrode and the sealing assembly and between the negative electrode and the exterior were changed from the aspect illustrated in FIG. 4 to the aspect illustrated in FIG. 3(a), and the number of the positive electrode leads was changed to one.

### <Comparative Example 20>

A test cell was obtained in the same manner as in Example 7 except that, in the production of the positive electrode, the positive electrode slurry was applied so that the basis weight was 225 g/m².

### <Comparative Example 21>

A test cell was obtained in the same manner as in Example 7 except that: in the production of the positive electrode, the rolled product was cut to a predetermined electrode size to be housed in an exterior with φ21 mm in outer diameter to obtain a positive electrode; and in the production of the test cell, the electrode assembly was housed in the exterior with φ21 mm in outer diameter.

### <Comparative Example 22>

A test cell was obtained in the same manner as in Example 8 except that, in the production of the test cell, the connection aspects between the positive electrode and the sealing assembly and between the negative electrode and the exterior were changed from the aspect illustrated in FIG. 4 to the aspect illustrated in FIG. 3(a), and the number of the positive electrode leads was changed to one.

### <Comparative Example 23>

A test cell was obtained in the same manner as in Example 8 except that, in the production of the positive electrode, the positive electrode slurry was applied so that the basis weight was 225 g/m².

### <Comparative Example 24>

A test cell was obtained in the same manner as in Example 8 except that: in the production of the positive electrode, the rolled product was cut to a predetermined electrode size to be housed in an exterior with φ18 mm in outer diameter to obtain a positive electrode; and in the production of the test cell, the electrode assembly was housed in the exterior with φ18 mm in outer diameter.

### <Reference Example 1>

A test cell was obtained in the same manner as in Example 1 except that: in the production of the positive electrode active material, the composition of the lithium-containing composite oxide was set to be Ni_{0.82}Co_{0.15}Al_{0.03}O₂; in the production of the positive electrode, the conductive agent was changed from 0.1 part by mass of carbon nanotube to 1.5 parts by mass of acetylene black, the positive electrode slurry was applied so that the basis weight was 350 g/m², and the rolled product was cut to a predetermined electrode size to be housed in an exterior with φ45 mm in outer diameter to obtain a positive electrode; and in the production of the test cell, the number of the aluminum leads was changed to four, and the electrode assembly was housed in the exterior with φ45 mm in outer diameter.

### <Reference Example 2>

A test cell was obtained in the same manner as in Reference Example 1 except that, in the production of the test cell, the number of the aluminum leads was changed to one.

### <Reference Example 3>

A test cell was obtained in the same manner as in Reference Example 1 except that; in the production of the positive electrode, the positive electrode slurry was applied so that the basis weight was 225 g/m²; and in the production of the test cell, as illustrated in FIG. 4, the positive electrode and the sealing assembly were connected via a positive electrode current collecting member, and the negative electrode and the exterior were connected via a negative electrode current collecting member.

The costs and internal resistance of the test cells of Examples, Comparative Examples, and Reference Examples are separately shown in Tables 1 to 9. Tables 1 to 9 also show: the composition of the lithium-containing composite oxide (the rate of each metal element to the total number of moles of the metal elements excluding Li); the outer diameter of the battery; the basis weight of the positive electrode mixture layer; the amounts of added carbon nanotube (CNT), acetylene black (AB), and Li₂NiO₂ in the positive electrode mixture layer; the current-collecting aspect of the positive electrode (the aspect illustrated in FIG. 3(a) is described as "One line", the aspect illustrated in FIG. 3(b) is described as "Equivalent", and the aspect illustrated in FIG. 4 is described as "Current collecting member"); and the number of the aluminum leads. The costs of the test cells of Comparative Examples 1 to 3 are shown in Table 1 as a relative evaluation relative to that of Example 1 as a reference. A cost almost same as or lower than that of Example 1 was evaluated as "Good", a cost higher than that of Example 1 by less than or equal to 50% was evaluated as "Fair", and a cost higher than that of Example 1 by greater than 50% was evaluated as "Bad". The internal resistance of the test cells of Comparative Examples 1 to 3 is described relative to the internal resistance of the test cell of Example 1 being 100.

The costs of the test cells of Comparative Examples 4 to 6 shown in Table 2 are relatively evaluated to that of Example 2 as a reference. The internal resistance of the test cells of Comparative Examples 4 to 6 are described relative to the internal resistance of the test cell of Example 2 being 100.

The costs of the test cells of Comparative Examples 7 to 9 shown in Table 3 are relatively evaluated to that of Example 3 as a reference. The internal resistance of the test cells of Comparative Examples 7 to 9 are described relative to the internal resistance of the test cell of Example 3 being 100.

The costs of the test cells of Comparative Examples 10 to 12 shown in Table 4 are relatively evaluated to that of Example 4 as a reference. The internal resistance of the test cells of Comparative Examples 10 to 12 are described relative to the internal resistance of the test cell of Example 4 being 100.

The costs of the test cells of Comparative Examples 13 to 15 shown in Table 5 are relatively evaluated to that of Example 5 as a reference. The internal resistance of the test cells of Comparative Examples 13 to 15 are described relative to the internal resistance of the test cell of Example 5 being 100.

The costs of the test cells of Comparative Examples 16 to 18 shown in Table 6 are relatively evaluated to that of Example 6 as a reference. The internal resistance of the test cells of Comparative Examples 16 to 18 are described relative to the internal resistance of the test cell of Example 6 being 100.

The costs of the test cells of Comparative Examples 19 to 21 shown in Table 7 are relatively evaluated to that of Example 7 as a reference. The internal resistance of the test cells of Comparative Examples 19 to 21 are described relative to the internal resistance of the test cell of Example 7 being 100.

The costs of the test cells of Comparative Examples 22 to 24 shown in Table 8 are relatively evaluated to that of Example 8 as a reference. The internal resistance of the test cells of Comparative Examples 22 to 24 are described relative to the internal resistance of the test cell of Example 8 being 100.

The costs of the test cells of Reference Examples 1 to 3 shown in Table 9 are relatively evaluated to that of Reference Example 1 as a reference. The internal resistance of the test cells of Reference Examples 1 to 3 are described relative to the internal resistance of the test cell of Reference Example 1 being 100.

**[Table 1]**

| | Composition of lithium-containing composite oxide [mol% | | | | Outer diameter of battery [mm] | Basis weight [g/m²] | Addition amount in positive electrode mixture layer [part by mass] | | | Current collection with positive electrode | | Evaluation results | |
|---|---|---|---|---|---|---|---|---|---|---|---|---|---|
| | Ni | Co | Al | Mn | | | CNT | AB | Li₂NiO₂ | Aspect | Number of leads | Cost | Internal resistance |
| Example 1 | 70 | 0 | 6 | 24 | 50 | 250 | 0.1 | - | - | One line | 6 | Good | 100 |
| Comparative Example 1 | 70 | 0 | 6 | 24 | 50 | 250 | 0.1 | - | - | - | 1 | Good | 510 |
| Comparative Example 2 | 70 | 0 | 6 | 24 | 50 | 200 | 0.1 | - | - | One line | 6 | Fair | 84 |
| Comparative Example 3 | 70 | 0 | 6 | 24 | 18 | 250 | 0.1 | - | - | One line | 6 | Bad | 82 |

**[Table 2]**

| | Composition of lithium-containing composite oxide [mol% | | | | Outer diameter of battery [mm] | Basis weight [g/m²] | Addition amount in positive electrode mixture layer [part by mass] | | | Current collection with positive electrode | | Evaluation results | |
|---|---|---|---|---|---|---|---|---|---|---|---|---|---|
| | Ni | Co | Al | Mn | | | CNT | AB | Li₂NiO₂ | Aspect | Number of leads | Cost | Internal resistance |
| Example 2 | 75 | 0 | 0 | 25 | 45 | 275 | - | 1.5 | - | Current collecting member | - | Good | 100 |
| Comparative Example 4 | 75 | 0 | 0 | 25 | 45 | 275 | - | 1.5 | - | - | 1 | Good | 500 |
| Comparative Example 5 | 75 | 0 | 0 | 25 | 45 | 190 | - | 1.5 | - | Current collecting member | - | Fair | 94 |
| Comparative Example 6 | 75 | 0 | 0 | 25 | 21 | 275 | - | 1.5 | - | Current collecting member | - | Bad | 92 |

**[Table 3]**

| | Composition of lithium-containing composite oxide [mol% | | | | Outer diameter of battery [mm] | Basis weight [g/m²] | Addition amount in positive electrode mixture layer [part by mass] | | | Current collection with positive electrode | | Evaluation results | |
|---|---|---|---|---|---|---|---|---|---|---|---|---|---|
| | Ni | Co | Al | Mn | | | CNT | AB | Li₂NiO₂ | Aspect | Number of leads | Cost | Internal resistance |
| Example 3 | 80 | 0 | 0 | 20 | 40 | 300 | 0.1 | - | - | Equivalent | 3 | Good | 100 |
| Comparative Example 7 | 80 | 0 | 0 | 20 | 40 | 300 | 0.1 | - | - | - | 1 | Good | 440 |
| Comparative Example 8 | 80 | 0 | 0 | 20 | 40 | 200 | 0.1 | - | - | Equivalent | 3 | Fair | 90 |
| Comparative Example 9 | 80 | 0 | 0 | 20 | 21 | 300 | 0.1 | - | - | Equivalent | 3 | Bad | 88 |

**[Table 4]**

| | Composition of lithium-containing composite oxide [mol% | | | | Outer diameter of battery [mm] | Basis weight [g/m²] | Addition amount in positive electrode mixture layer [part by mass] | | | Current collection with positive electrode | | Evaluation results | |
|---|---|---|---|---|---|---|---|---|---|---|---|---|---|
| | Ni | Co | Al | Mn | | | CNT | AB | Li₂NiO₂ | Aspect | Number of leads | Cost | Internal resistance |
| Example 4 | 80 | 0 | 5.5 | 14.5 | 50 | 325 | 0.1 | - | - | One line | 3 | Good | 100 |
| Comparative Example 10 | 80 | 0 | 5.5 | 14.5 | 50 | 325 | 0.1 | - | - | - | 1 | Good | 350 |
| Comparative Example 11 | 80 | 0 | 5.5 | 14.5 | 50 | 200 | 0.1 | - | - | One line | 3 | Fair | 92 |
| Comparative Example 12 | 80 | 0 | 5.5 | 14.5 | 21 | 325 | 0.1 | - | - | One line | 3 | Bad | 98 |

**[Table 5]**

| | Composition of lithium-containing composite oxide [mol% | | | | Outer diameter of battery [mm] | Basis weight [g/m²] | Addition amount in positive electrode mixture layer [part by mass] | | | Current collection with positive electrode | | Evaluation results | |
|---|---|---|---|---|---|---|---|---|---|---|---|---|---|
| | Ni | Co | Al | Mn | | | CNT | AB | Li₂NiO₂ | Aspect | Number of leads | Cost | Internal resistance |
| Example 5 | 85 | 0 | 6 | 9 | 45 | 350 | 0.1 | - | - | Current collecting member | - | Good | 100 |
| Comparative Example 13 | 85 | 0 | 6 | 9 | 45 | 350 | 0.1 | - | - | - | 1 | Good | 386 |
| Comparative Example 14 | 85 | 0 | 6 | 9 | 45 | 225 | 0.1 | - | - | Current collecting member | - | Fair | 95 |
| Comparative Example 15 | 85 | 0 | 6 | 9 | 21 | 350 | 0.1 | - | - | Current collecting member | - | Bad | 93 |

**[Table 6]**

| | Composition of lithium-containing composite oxide [mol% | | | | Outer diameter of battery [mm] | Basis weight [g/m²] | Addition amount in positive electrode mixture layer [part by mass] | | | Current collection with positive electrode | | Evaluation results | |
|---|---|---|---|---|---|---|---|---|---|---|---|---|---|
| | Ni | Co | Al | Mn | | | CNT | AB | Li₂NiO₂ | Aspect | Number of leads | Cost | Internal resistance |
| Example 6 | 90 | 0 | 5 | 5 | 40 | 250 | - | 1.5 | 5 | One line | 4 | Good | 100 |
| Comparative Example 16 | 90 | 0 | 5 | 5 | 40 | 250 | - | 1.5 | 5 | - | 1 | Good | 447 |
| Comparative Example 17 | 90 | 0 | 5 | 5 | 40 | 225 | - | 1.5 | 5 | One line | 4 | Fair | 96 |
| Comparative Example 18 | 90 | 0 | 5 | 5 | 18 | 250 | - | 1.5 | 5 | One line | 4 | Bad | 91 |

**[Table 7]**

| | Composition of lithium-containing composite oxide [mol% | | | | Outer diameter of battery [mm] | Basis weight [g/m²] | Addition amount in positive electrode mixture layer [part by mass] | | | Current collection with positive electrode | | Evaluation results | |
|---|---|---|---|---|---|---|---|---|---|---|---|---|---|
| | Ni | Co | Al | Mn | | | CNT | AB | Li₂NiO₂ | Aspect | Number of leads | Cost | Internal resistance |
| Example 7 | 92.5 | 0 | 5 | 2.5 | 35 | 300 | 0.1 | - | 5 | Current collecting member | - | Good | 100 |
| Comparative Example 19 | 92.5 | 0 | 5 | 2.5 | 35 | 300 | 0.1 | - | 5 | - | 1 | Good | 407 |
| Comparative Example 20 | 92.5 | 0 | 5 | 2.5 | 35 | 225 | 0.1 | - | 5 | Current collecting member | - | Fair | 93 |
| Comparative Example 21 | 92.5 | 0 | 5 | 2.5 | 21 | 300 | 0.1 | - | 5 | Current collecting member | - | Bad | 83 |

**[Table 8]**

| | Composition of lithium-containing composite oxide [mol% | | | | Outer diameter of battery [mm] | Basis weight [g/m²] | Addition amount in positive electrode mixture layer [part by mass] | | | Current collection with positive electrode | | Evaluation results | |
|---|---|---|---|---|---|---|---|---|---|---|---|---|---|
| | Ni | Co | Al | Mn | | | CNT | AB | Li₂NiO₂ | Aspect | Number of leads | Cost | Internal resistance |
| Example 8 | 92.5 | 0 | 5 | 2.5 | 50 | 325 | 0.1 | - | - | Current collecting member | - | Good | 100 |
| Comparative Example 22 | 92.5 | 0 | 5 | 2.5 | 50 | 325 | 0.1 | - | - | - | 1 | Good | 453 |
| Comparative Example 23 | 92.5 | 0 | 5 | 2.5 | 50 | 225 | 0.1 | - | - | Current collecting member | - | Fair | 96 |
| Comparative Example 24 | 92.5 | 0 | 5 | 2.5 | 18 | 325 | 0.1 | - | - | Current collecting member | - | Bad | 94 |

**[Table 9]**

| | Composition of lithium-containing composite oxide [mol% | | | | Outer diameter of battery [mm] | Basis weight [g/m²] | Addition amount in positive electrode mixture layer [part by mass] | | | Current collection with positive electrode | | Evaluation results | |
|---|---|---|---|---|---|---|---|---|---|---|---|---|---|
| | Ni | Co | Al | Mn | | | CNT | AB | Li₂NiO₂ | Aspect | Number of leads | Cost | Internal resistance |
| Reference Example 1 | 82 | 15 | 3 | 0 | 45 | 350 | - | 1.5 | - | One line | 4 | Good | 100 |
| Reference Example 2 | 82 | 15 | 3 | 0 | 45 | 350 | - | 1.5 | - | - | 1 | Good | 104 |
| Reference Example 3 | 82 | 15 | 3 | 0 | 45 | 225 | - | 1.5 | - | Current collecting member | - | Bad | 96 |

In all Tables 1 to 8, Examples were able to achieve both of the cost reduction and reduction of the internal resistance compared with Comparative Examples.

### REFERENCE SIGNS LIST

10 secondary battery, 11 positive electrode, 12 negative electrode, 13 separator, 14 electrode assembly, 15 exterior, 16 sealing assembly, 17, 18 insulating plate, 19 positive electrode lead, 20 negative electrode lead, 21 grooved portion, 22 filter, 23 lower vent member, 24 insulating member, 25 upper vent member, 26 cap, 26a opening, 27 gasket, 30 positive electrode current collector, 32 positive electrode mixture layer, 34 positive electrode exposed portion, 40 negative electrode current collector, 42 negative electrode mixture layer, 44 negative electrode exposed portion, 50 positive electrode current collecting member, 52 negative electrode current collecting member

## Claims

1. A non-aqueous electrolyte secondary battery, comprising:
an electrode assembly in which a band-shaped positive electrode and a band-shaped negative electrode are wound with a separator interposed therebetween;
a bottomed cylindrical exterior with greater than or equal to 25 mm in outer diameter that houses the electrode assembly and that is connected to the negative electrode; and
a sealing assembly that seals an opening of an upper end of the exterior and that is connected to the positive electrode, wherein
the positive electrode includes: a positive electrode current collector; and a positive electrode mixture layer formed on a surface of the positive electrode current collector and containing a positive electrode active material and a conductive agent,
the positive electrode active material includes a lithium-containing composite oxide, and the lithium-containing composite oxide has a layered rock-salt structure, contains substantially no Co, and contains at least Ni and Mn,
a content rate of Ni in the lithium-containing composite oxide is greater than or equal to 70 mol% relative to a total number of moles of metal elements excluding Li,
a basis weight of the positive electrode mixture layer is greater than or equal to 250 g/m², and
in the electrode assembly, greater than or equal to three positive electrode leads are drawn out.

2. The non-aqueous electrolyte secondary battery according to claim 1, wherein the positive electrode leads are arranged on an upper surface of the electrode assembly in substantially one line in a radial direction.

3. The non-aqueous electrolyte secondary battery according to claim 1, wherein the positive electrode leads are arranged on an upper surface of the electrode assembly with substantially same angles.

4. The non-aqueous electrolyte secondary battery according to any one of claims 1 to 3, wherein the positive electrode has a positive electrode current collector exposed portion where the positive electrode current collector is exposed on an upper end, and the positive electrode leads are connected to the positive electrode current collector exposed portion.

5. A non-aqueous electrolyte secondary battery, comprising:
an electrode assembly in which a band-shaped positive electrode and a band-shaped negative electrode are wound with a separator interposed therebetween;
a bottomed cylindrical exterior with greater than or equal to 25 mm in outer diameter that houses the electrode assembly and that is connected to the negative electrode; and
a sealing assembly that seals an opening of an upper end of the exterior and that is connected to the positive electrode, wherein
the positive electrode includes: a positive electrode current collector; and a positive electrode mixture layer formed on a surface of the positive electrode current collector and containing a positive electrode active material and a conductive agent,
the positive electrode active material includes a lithium-containing composite oxide, and the lithium-containing composite oxide has a layered rock-salt structure, contains substantially no Co, and contains at least Ni and Mn,
a content rate of Ni in the lithium-containing composite oxide is greater than or equal to 70 mol% relative to a total number of moles of metal elements excluding Li,
a basis weight of the positive electrode mixture layer is greater than or equal to 250 g/m², and
in the electrode assembly, the positive electrode protruding above the negative electrode and the separator is connected to a positive electrode current collecting member, and the positive electrode current collecting member and the sealing assembly are connected with a positive electrode lead.

6. The non-aqueous electrolyte secondary battery according to any one of claims 1 to 5, wherein the conductive agent includes carbon fiber, and a content of the carbon fiber in the positive electrode mixture layer is greater than or equal to 0.01 part by mass and less than or equal to 1 part by mass relative to 100 parts by mass of the positive electrode active material.

7. The non-aqueous electrolyte secondary battery according to any one of claims 1 to 6, wherein the conductive agent includes amorphous carbon, and a content of the amorphous carbon included in the positive electrode mixture layer is greater than or equal to 1 part by mass and less than or equal to 3 parts by mass relative to 100 parts by mass of the positive electrode active material.

8. The non-aqueous electrolyte secondary battery according to any one of claims 1 to 7, wherein a content rate of Ni in the lithium-containing composite oxide is greater than or equal to 70 mol% and less than or equal to 95 mol% relative to a total number of moles of metal elements excluding Li.

9. The non-aqueous electrolyte secondary battery according to any one of claims 1 to 8, wherein the positive electrode mixture layer further contains Li₂NiO₂.

10. The non-aqueous electrolyte secondary battery according to claim 9, wherein a mass of Li₂NiO₂ included in the positive electrode mixture layer is greater than or equal to 1 part by mass and less than or equal to 10 parts by mass relative to 100 parts by mass of the positive electrode active material included in the positive electrode mixture layer.

11. The non-aqueous electrolyte secondary battery according to any one of claims 1 to 10, wherein the positive electrode mixture layer further contains a compound represented by the general formula LiₐNi₂₋ₐO₂ (0 < a ≤ 0.5).

12. The non-aqueous electrolyte secondary battery according to claim 11, wherein a mass of the compound included in the positive electrode mixture layer and represented by the general formula LiₐNi₂₋ₐO₂ (0 < a ≤ 0.5) is greater than or equal to 0.1 part by mass and less than or equal to 5 parts by mass relative to 100 parts by mass of the positive electrode active material included in the positive electrode mixture layer.
